# EUROPEAN PATENT APPLICATION

(11) **EP 3 702 078 A1**
(43) Date of publication of application: **02.09.2020**
(21) Application number: 19196072.3
(22) Date of filing: 06.09.2019
(51) Int. Cl.: B23C 3/02, B23C 5/10, B23C 5/12, B62D 7/18

(54) **COMBINED TOOL FOR MACHINING REAR STEERING KNUCKLE CENTER HOLE AND MACHINING METHOD THEREOF**

(30) Priority: 01.03.2019 CN 201910157042
(71) Applicant: Citic Dicastal Co., Ltd., 066011 Quinhuangdao, Heibei (CN)
(72) Inventor: An, Gang, Qinhuangdao, Heibei 066011 (CN); Yan, Xinhe, Qinhuangdao, Heibei 066011 (CN); Wang, Haitang, Qinhuangdao, Heibei 066011 (CN)
(74) Representative: Gong, Jinping

(57) **Abstract**

The present disclosure relates to the field of machining, and provides a combined tool for machining a rear steering knuckle center hole and a machining method thereof. The combined tool for machining a rear steering knuckle center hole includes: a tool body, wherein the tool body includes a shank (1), a tool bar (2) and a step-like tool bit (3); the step-like tool bit (3) is provided with at least two tool teeth (32) uniformly disposed in a circumferential direction; the at least two tool teeth (32) extend along an axial direction of the combined tool for machining a rear steering knuckle center hole, and a chip discharge groove (31) is concavely arranged between any two adjacent tool teeth (31); and a blade assembly (41-44, 45-48), wherein the blade assembly (41-44, 45-48) includes various blades (41-44, 45-48); the blade assembly includes at least two groups of blades corresponding to the at least two tool teeth (31); each group of blades is mounted on a mounting plane (311) of the corresponding tool tooth (31) along the axial direction; and projections of all the blades (41-48) in the axial direction are continuous and cover a machining range of the rear steering knuckle center hole.

## Description

### Technical Field

The present disclosure relates to the field of machining, and more particularly relates to a combined tool for machining a rear steering knuckle center hole and a machining method thereof.

### Background

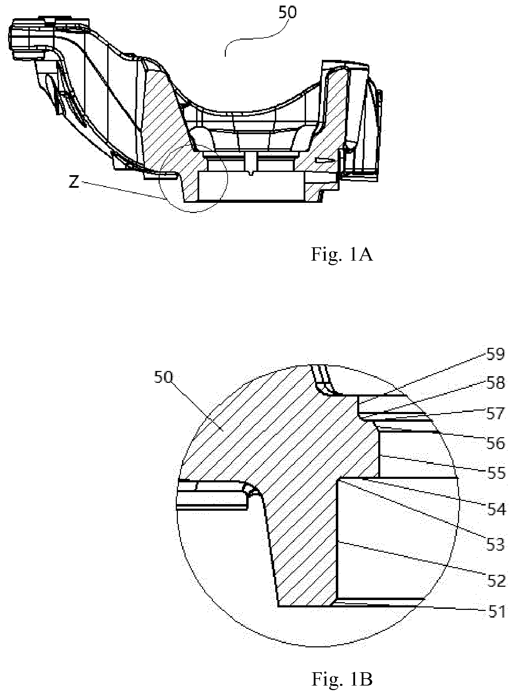

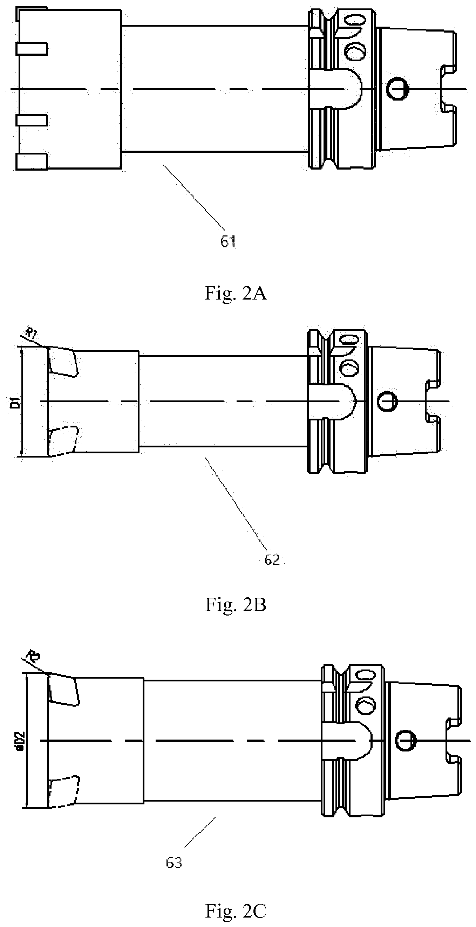

A rear steering knuckle center hole of an automobile often consists of a variety of machining features. For example, a rear steering knuckle center hole of a certain automobile enterprise as shown in Figs. 1A and 1B consists of three serial holes with different apertures, two planes, two arc angles of different sizes, a chamfer of 45 degrees and a chamfer of 30 degrees. Each feature is machined with a corresponding tool. Even if some of feature tools can be combined, three boring tools, one face milling cutter and two chamfer mills as shown in Figs. 2A to 2F are needed to machine these features. The entire machining process requires tool changing for 6 times. In the machining process, the tools need to be fed from two directions, and a working table needs to be rotated by 180 degrees. A step-by-step machining method using a tool with a single function has inconvenient machining procedures, increases the workload of machining and prolongs the machining cycle of a single piece, which not only increases the cost, but also wastes resources. In addition, a large number of tools cause high tool cost, and the capacity of a machine tool magazine is increased, so that the machine cost is increased.

Therefore, there is a need for a combined tool for machining a rear steering knuckle center hole and a machining method thereof, which can solve or at least relieve the defects in the prior art.

### Summary

To solve the technical problem, the present disclosure provides a combined tool for machining a rear steering knuckle center hole and a machining method thereof. Machining of all features of the rear steering knuckle center hole may be completed at a time.

The technical solution adopted by the present disclosure is as follows.

According to a first possible implementation of the present disclosure, the combined tool for machining a rear steering knuckle center hole includes: a tool body, wherein the tool body includes a shank, a tool bar and a steplike tool bit; the steplike tool bit is provided with at least two tool teeth uniformly disposed in a circumferential direction; the at least two tool teeth extend along an axial direction of the combined tool for machining a rear steering knuckle center hole, and a chip breaker groove is concavely arranged between any two adjacent tool teeth; and a blade assembly, wherein the blade assembly includes various blades; the blade assembly includes at least two groups of blades corresponding to the at least two tool teeth; each group of blades are mounted on a mounting plane of the circumferential side surface of the corresponding tool tooth along the axial direction; and projections of all the blades in the axial direction are continuous and cover a machining range of the rear steering knuckle center hole.

According to the above first possible implementation of the present disclosure, each group of blades at least include one of a chamfer machining blade, a hole machining blade, an arc angle machining blade and a plane machining blade, so as to machine a chamfer, a round hole, an arc angle and a plane perpendicular to the axial line respectively when the combined tool for machining a rear steering knuckle center hole rotates around an axial line of the combined tool for machining a rear steering knuckle center hole.

According to a second possible implementation of the present disclosure, the steplike tool bit is provided with an even number of tool teeth. The two groups of blades mounted on the mounting planes of any two tool teeth that are symmetric in the radial direction are the same and are symmetric in the radial direction. The two groups of blades mounted on the mounting planes of any two tool teeth that are asymmetric in the radial direction are different and are staggered in the axial direction.

According to a third possible implementation of the present disclosure, the steplike tool bit is provided with four tool teeth, and the blade assembly includes four groups of blades.

According to a fourth possible implementation of the present disclosure, each group of blades include four blades. The four blades of the first group are a first blade, a second blade, a third blade and a fourth blade respectively. The four blades of the second group are a fifth blade, a sixth blade, a seventh blade and an eighth blade respectively. The four blades of the third group and the four blades of the first group are exactly the same and are symmetric in the radial direction. The four blades of the fourth group and the four blades of the second group are exactly the same and are symmetric in the radial direction.

According to a fifth possible implementation of the present disclosure, the steplike tool bit is divided into four sections according to the diameters, including, from the end far away from the shank, a first section, a second section, a third section and a fourth section respectively. The diameter of the fourth section is greater than that of the third section; the diameter of the third section is greater than that of the first section; and the diameter of the first section is greater than that of the second section.

According to a sixth possible implementation of the present disclosure, the rear steering knuckle center hole corresponding to the third section to the first section of the steplike tool bit includes a first hole, a second hole and a third hole in sequence. The diameter of the first hole is greater than that of the third hole, and the diameter of the third hole is greater than that of the second hole. A first plane is formed between the first hole and the second hole, and a second plane is formed between the second hole and the third hole. The first end part, adjacent to the first plane, of the first hole is provided with a first arc angle. The second end part, opposite to the first end part, of the first hole is provided with a first chamfer. A second chamfer is formed between the second plane and the second hole. A second arc angle is formed between the second plane and the third hole.

The first blade is mounted at the third section of the steplike tool bit to machine the first hole.

The second blade is mounted at a joint of the second section and the third section of the steplike tool bit, stretches over the second section and the third section, and is used to machine the first hole, the first arc angle and the first plane.

The third blade is mounted at the second section of the steplike tool bit to machine the second hole and the second chamfer.

The fourth blade is mounted at the first section of the steplike tool bit to machine the third hole.

The fifth blade is mounted at a joint of the third section and the fourth section of the steplike tool bit, stretches over the third section and the fourth section, and is used to machine the first chamfer and the first hole.

The sixth blade is mounted at the third section of the steplike tool bit to machine the first hole.

The seventh blade is mounted at a joint of the second section and the third section of the steplike tool bit, stretches over the second section and the third section, and is used to machine the second hole.

The eighth blade is mounted at the first section of the steplike tool bit to machine the second plane, the second arc angle and the third hole.

According to the third possible implementation of the present disclosure, the steplike tool bit is provided with six tool teeth, and the blade assembly includes six groups of blades.

According to an eighth possible implementation of the present disclosure, each group of blades include four blades.

A method for machining a rear steering knuckle center hole by using the combined tool for machining a rear steering knuckle center hole according to the first to ninth possible implementations of the present disclosure includes:
tool centring: moving the combined tool for machining a rear steering knuckle center hole to a centring position such that an axial line of the combined tool for machining a rear steering knuckle center hole coincides with an axial line of a rear steering knuckle center hole to be machined in an axial direction;
interpolation feeding: performing anticlockwise arc interpolation feeding on the combined tool for machining a rear steering knuckle center hole by 1/2 of a circumference by taking a circle center of the rear steering knuckle center hole as a start point;
interpolation machining: performing anticlockwise arc interpolation machining on the combined tool for machining a rear steering knuckle center hole by 3/4 of the circumference, then performing anticlockwise spiral interpolation machining towards the outer side by 1/4 of the circumference, and performing anticlockwise arc interpolation machining by a whole circle; and
interpolation retraction: performing anticlockwise arc interpolation retraction on the combined tool for machining a rear steering knuckle center hole to the start point.

According to one or more implementations of the present disclosure, the following beneficial effects can be achieved:
1. the machining of all the features of the rear steering knuckle center hole may be completed at a time; in an existing machining method, each of N (N greater than or equal to 3) tools for machining a rear steering knuckle center hole is used to machine one or more features, and the tools need to be fed for N times at least, but after the combined tool of the present disclosure is used, all the positions may be machined by feeding the tool twice, so the (N-2)-tool cutting time is saved in a cutting process;
2. in the original method, N tools are used, and may be changed for N times, but if the combined tool of the present disclosure is used, the tool only needs to be changed once, so that the time spent by tool changing for N-1 times is saved; in addition, the idle stroke time generated by feeding and retraction during the N-1 times of tool changing is also reduced, and the tool changing time and the idle stroke time are both auxiliary time; when cutting parameters may be no longer optimized, saving the auxiliary time is particularly important to improve the production efficiency;
3. the tool number is changed from N to 1, so that the tool cost is reduced, and the requirement for the capacity of the machine tool magazine is lowered; and
4. the working table does not need to be turned over or rotated in the process of machining the rear steering knuckle center hole, so as to guarantee the parts accuracy.

### Brief Description of the Drawings

The technical and industrial meanings of the features, advantages and exemplary implementations of the present disclosure will be described below with reference to accompanying drawings. In the drawings, the same numerals refer to same elements.
Fig. 1A is a cross-sectional structural schematic diagram of a rear steering knuckle of an automobile according to the prior art;
Fig. 1B is a partially enlarged diagram of a region Z in Fig. 1A;
Fig. 2A is a front view of a first tool used for machining a rear steering knuckle center hole as shown in Fig. 1A in the prior art;
Fig. 2B is a front view of a second tool used for machining a rear steering knuckle center hole as shown in Fig. 1A in the prior art;
Fig. 2C is a front view of a third tool used for machining a rear steering knuckle center hole as shown in Fig. 1A in the prior art;
Fig. 2D is a front view of a fourth tool used for machining a rear steering knuckle center hole as shown in Fig. 1A in the prior art;
Fig. 2E is a front view of a fifth tool used for machining a rear steering knuckle center hole as shown in Fig. 1A in the prior art;
Fig. 2F is a front view of a sixth tool used for machining a rear steering knuckle center hole as shown in Fig. 1A in the prior art;
Fig. 3 is a three-dimensional schematic diagram of a combined tool for machining a rear steering knuckle center hole according to one exemplary implementation of the present disclosure;
Fig. 4 is a front view of the combined tool for machining a rear steering knuckle center hole as shown in Fig. 3;
Fig. 5 is a top view of the combined tool for machining a rear steering knuckle center hole as shown in Fig. 3;
Fig. 6 is a left view of the combined tool for machining a rear steering knuckle center hole as shown in Fig. 3;
Fig. 7 is a tool path diagram of a combined tool for machining a rear steering knuckle center hole in a method for machining a rear steering knuckle center hole according to the combined tool for machining a rear steering knuckle center hole of the present disclosure;
Fig. 8A is a schematic cross-sectional diagram of machining of a rear steering knuckle with a rear steering knuckle center hole according to a combined tool for machining a rear steering knuckle center hole of the present disclosure; and
Fig. 8B is a partially enlarged diagram of a region Y in Fig. 8A.

In the drawings:
1: shank;
2: tool bar;
3: steplike tool bit; 31: chip breaker groove; 311: mounting plane; 32: tool tooth; 321: first tool tooth; 322: second tool tooth; 323: third tool tooth; 324: fourth tool tooth; 341: first cooling hole; 342: second cooling hole;
41: first blade; 42: second blade; 43: third blade; 44: fourth blade; 45: fifth blade; 46: sixth blade; 47: seventh blade; 48: eighth blade;
a: first section; b: second section; c: third section; d: fourth section;
5: rear steering knuckle to be machined; 50: rear steering knuckle; 51: first chamfer; 52: first hole; 53: first arc angle; 54: first plane; 55: second hole; 56: second chamfer; 57: second plane; 58: second arc angle; 59: third hole;
61: face milling cutter; 62: double-edge boring tool; 63: double-edge boring tool; 64: chamfer mill; 65: double-edge boring tool; and 66: chamfer mill.

### Detailed Description of the Embodiments

The exemplary implementations of the present disclosure are described below in detail with reference to the drawings. The descriptions of the exemplary implementations are merely illustrative, and shall in no way limit the present disclosure and its application or usage. Furthermore, the sizes and proportions of all the components in the drawings are also merely illustrative, and do not really correspond to actual products.

Fig. 1A is a cross-sectional structural schematic diagram of a rear steering knuckle of an automobile according to the prior art, and Fig. 1B is a partially enlarged diagram of a region Z in Fig. 1A. First of all, the maximum diameter of a tool for machining a rear steering knuckle center hole needs to be less than the diameter of a roughly machined center hole of a rear steering knuckle 50. After the rear steering knuckle 50 is subjected to differential pressure casting, pouring gate removal (a pouring gate is sawn off with a saw web tool for a special machine tool) and center hole pre-drilling are performed. Allowances of each hole wall and each seam are 2 to 3 mm. In the machining procedure of the machine tool, only fine machining is performed. That is, only the combined tool for machining a rear steering knuckle center hole is used for interpolation milling to complete the machining.

It can be seen from Figs. 1A and 1B that the rear steering knuckle center hole has nine machining features. The rear steering knuckle center hole corresponding to a third section c to a first section a of a steplike tool bit 3 includes a first hole 52, a second hole 55 and a third hole 59 in sequence. The diameter of the first hole 52 is greater than that of the third hole 59, and the diameter of the third hole 59 is greater than that of the second hole 55. A first plane 54 is formed between the first hole 52 and the second hole 55, and a second plane 57 is formed between the second hole 55 and the third hole 59. The first end part, adjacent to the first plane 54, of the first hole 52 is provided with a first arc angle 53. The second end part, opposite to the first end part, of the first hole 52 is provided with a first chamfer 51. A second chamfer 56 is formed between the second plane 57 and the second hole 55. A second arc angle 58 is formed between the second plane 57 and the third hole 59.

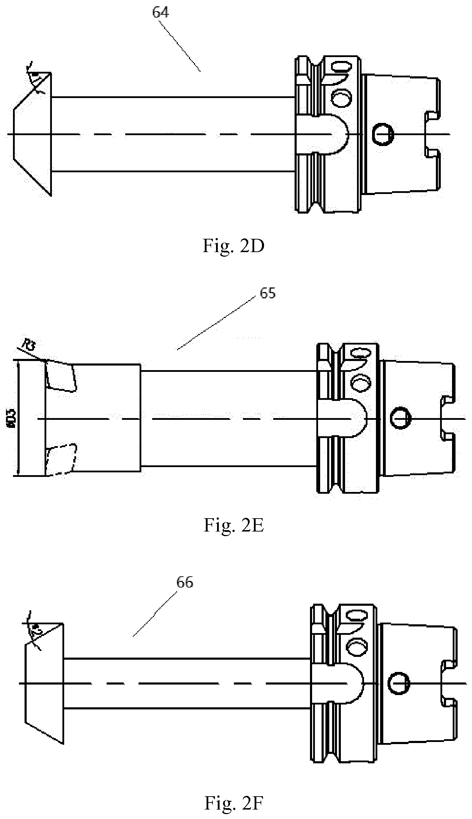

In the prior art, for the machining of the center hole of the rear steering knuckle 50 in Figs. 1A and 1B, the current machining method is as follows: six tools as shown in Figs. 2A, 2B, 2C, 2D, 2E and 2F are used, including a face milling cutter 61, a double-edge boring tool 62, a double-edge boring tool 63, a chamfer mill 64, a double-edge boring tool 65 and a chamfer mill 66 in sequence according to a use order. The face milling cutter 61 is used to machine the first plane 54 in Fig. 1B. The annular surface is relatively wide, and the width of a blade of a boring tool is insufficient, so that the face milling cutter 61 needs to be used for interpolation machining. The double-edge boring tool 62 has a diameter D1, and is used to machine the second hole 55. There is no requirement for a fillet of the double-edge boring tool 62. The double-edge boring tool 63 has a diameter D2, and is used to machine the first hole 52 and the first arc angle 53. The chamfer mill 64 has the specification of θ1, and is used to machine the first chamfer 51. The above steps perform machining from the back surface of the steering knuckle. The working table of the machine tool is turned over by 180 degrees or the working table drives a fixture to rotate 180 degrees, and then the following steps perform machining from the front surface of the steering knuckle. The double-edge boring tool 65 has a diameter D3, and is used to machine the third hole 59, the second arc angle 58 and the second plane 57. The chamfer mill 66 has a specification of θ2, and is used to machine the second chamfer 56. The method includes multiple machining steps, and is long in single-piece cycle time and low in production efficiency.

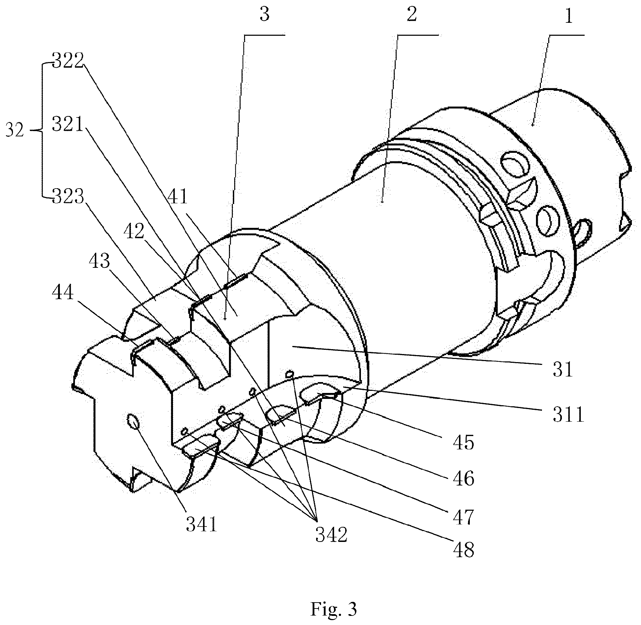

Fig. 3 is a three-dimensional schematic diagram of a combined tool for machining a rear steering knuckle center hole according to one exemplary implementation of the present disclosure. As shown in Fig. 3, the combined tool for machining a rear steering knuckle center hole according to one exemplary implementation of the present disclosure includes a tool body and a blade assembly. The tool body includes a shank 1, a tool bar 2 and a steplike tool bit 3 which are formed in sequence along an axial line of the tool body. A clamping portion is formed at one end of the shank 1. The tool body may be mounted to a fixture through the clamping portion, so as to fix the tool body to the fixture and fix a rear steering knuckle to be machined to another fixture. The rear steering knuckle to be machined is machined by a relative motion between the tool body and the rear steering knuckle to be machined. The tool bar 2 is located between the shank 1 and the steplike tool bit 3 to play a role of connecting the shank 1 to the steplike tool bit 3.

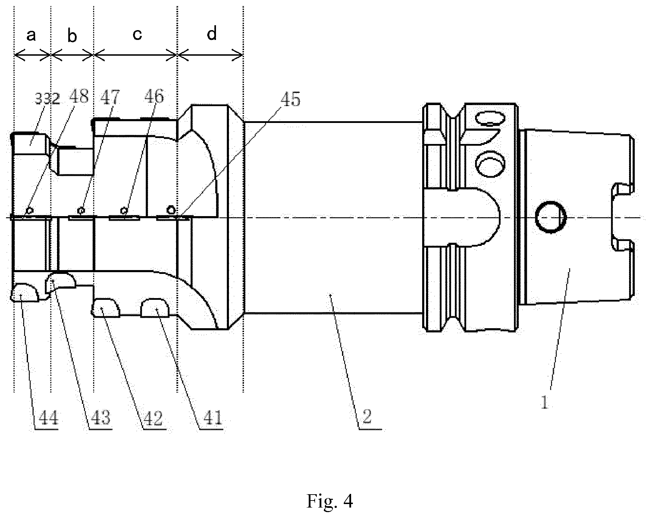

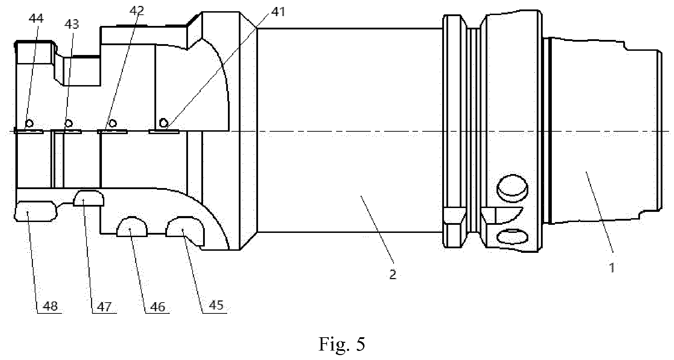

Figs. 4, 5 and 6 are a front view, a top view and a left view of the combined tool for machining a rear steering knuckle center hole as shown in Fig. 3 respectively. Referring to Figs. 4, 5 and 6, the surface, located in a chip breaker groove 31, of a tool tooth 32 is a mounting plane 311. A blade assembly is mounted and fixed to the mounting plane 311 such that a contact area between the blade assembly and the mounting plane 311 is relatively large and the shear strength of a joint of the blade assembly and the mounting plane 311 is guaranteed, thereby ensuring the shear capacity of the blade assembly, increasing the feed rate appropriately and improving the machining efficiency.

The steplike tool bit is divided into four sections according to the diameters, including, from the end far away from the shank, a first section a, a second section b, a third section c and a fourth section d respectively. The diameter of the fourth section d is greater than that of the third section c; the diameter of the third section c is greater than that of the first section a; and the diameter of the first section a is greater than that of the second section b.

The steplike tool bit 3 is provided with four tool teeth 32 uniformly disposed in a circumferential direction, namely a first tool tooth 321, a second tool tooth 322, a third tool tooth 323 and a fourth tool tooth 324 (not shown in Fig. 3), and the tool teeth extend along the axial direction of the combined tool for machining a rear steering knuckle center hole. Furthermore, the chip breaker groove 31 is concavely arranged between any two adjacent tool teeth. When the steplike tool bit 3 is rotated, the tool teeth formed on two sides of the chip breaker grooves 31 cut off a material cut down from a portion to be machined, allowing the machining to be continuous.

There are four tool teeth 32 as shown in Fig. 3, and correspondingly, there are four groups of blade assemblies. The first group of blades include a first blade 41, a second blade 42, a third blade 43 and a fourth blade 44, and the second group of blades include a fifth blade 45, a sixth blade 46, a seventh blade 47 and an eighth blade 48. The four blades of the third group of blades and the four blades of the first group are exactly the same, and are symmetric in a radial direction, and the four blades of the fourth group and the four blades of the second group are exactly the same, and are symmetric in the radial direction. The first group of blades and the third group of blades are mounted on the mounting plane 311 of the circumferential side surface of the first tool tooth 321 and the mounting plane 311 of the circumferential side surface of the third tool tooth 323 respectively, and the second group of blades and the fourth group of blades are mounted on the mounting plane 311 of the circumferential side surface of the second tool tooth 322 and the mounting plane 311 of the circumferential side surface of the fourth tool tooth 324 respectively. All the blades of the first group and the fourth group are distributed in sequence along the axial direction of the steplike tool bit 3, and projections of all the blade assemblies in the axial line of the tool body are continuous, and cover a machining range of the rear steering knuckle center hole, so as to machine a rear steering knuckle center hole with various features and also ensure the continuity of the rear steering knuckle center hole.

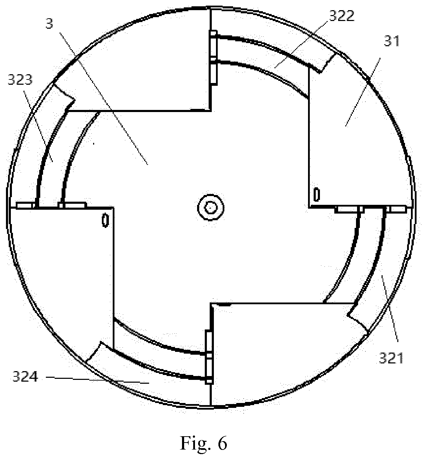

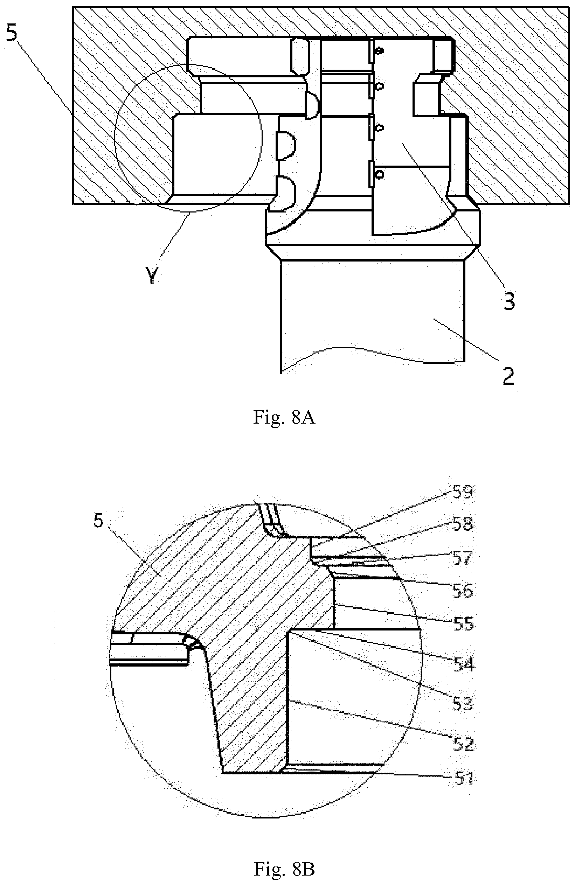

Fig. 8A is a schematic cross-sectional diagram of machining of a rear steering knuckle with a rear steering knuckle center hole according to a combined tool for machining a rear steering knuckle center hole of the present disclosure. Fig. 8B is a partially enlarged diagram of a region Y in Fig. 8A. The rear steering knuckle to be machined 5 has the same center hole as that of the rear steering knuckle in Figs. 6A to 6B. The positions of the blades of the combined tool for machining a rear steering knuckle center hole of the present disclosure and the effects of the blades during the machining of the rear steering knuckle center hole by the combined tool for machining a rear steering knuckle center hole are as follows:
the first blade 41 is mounted at the third section c of the steplike tool bit 3 to machine the first hole 52;
the second blade 42 is mounted at a joint of the second section b and the third section c of the steplike tool bit 3, stretches over the second section b and the third section c, and is used to machine the first hole 52, the first arc angle 53 and the first plane 54;
the third blade 43 is mounted at the second section b of the steplike tool bit 3 to machine the second hole 55 and the second chamfer 56;
the fourth blade 44 is mounted at the first section a of the steplike tool bit 3 to machine the third hole 59;
the fifth blade 45 is mounted at a joint of the third section c and the fourth section d of the steplike tool bit 3, stretches over the third section c and the fourth section d, and is used to machine the first chamfer 51 and the first hole 52;
the sixth blade 46 is mounted at the third section c of the steplike tool bit 3 to machine the first hole 52;
the seventh blade 47 is mounted at a joint of the second section b and the third section c of the steplike tool bit 3, stretches over the second section b and the third section c, and is used to machine the second hole 55; and
the eighth blade 48 is mounted at the first section a of the steplike tool bit 3 to machine the second plane 57, the second arc angle 58 and the third hole 59.

In addition, referring to Fig. 3, a first cooling hole 341 is formed in the center of the tool body. After the combined tool for machining a rear steering knuckle center hole is clamped on a machine tool spindle, the first cooling hole 341 in the center of the tool body is connected to a cooling hole in the machine tool spindle. The groove surfaces, adjacent to the mounting planes 311, in the chip breaker grooves 31 are provided with a plurality of cooling holes 342 close to the blade mounting positions. The second cooling holes 342 are connected to the first cooling hole 341 in the center of the tool body. After a cooling button of the machine tool is turned on, cooling fluid passes through the machine tool spindle, then the first cooling hole 341 in the center of the tool body and the second cooling hole 342 corresponding to each blade, and is sprayed to the edge portions of the blades.

It should be noted that although Fig. 3 shows four tool teeth 32, those of ordinary skilled in the art can understand that there are at least two tool teeth, such as two, three, four, five, six, seven and eight, preferably four or six. When the steplike tool bit 3 is provided with an even number of tool teeth, the two groups of blades mounted on the mounting planes 311 of any two tool teeth 32 that are symmetric in the radial direction are the same and are symmetric in the radial direction, and the two groups of blades mounted on the mounting planes 311 of any two tool teeth that are asymmetric in the radial direction are different and are staggered in the axial direction. The blade assembly may be mounted in a removable manner such as embedding, or in a non-removable manner such as welding. By the removable mounting, the blade assembly is convenient to replace and mount.

In addition, although the blade assembly includes four groups of blades in Figs. 3 to 6, those of ordinary skilled in the art can understand that the blade assembly may correspondingly include at least two groups of blades, such as two groups of blades, three groups of blades, four groups of blade, five groups of blades, six groups of blades, seven groups of blades and eight groups of blades, preferably four groups of blades or sixth groups of blades, according to the above-described at least two tool teeth disposed as required.

In addition, although the various blades included in the blade assembly in Figs. 3 to 6 are disposed according to the order and positions as shown in the figures, those of ordinary skilled in the art can understand that the type and number of the blades included in each group of blades may be changed as required, and the position of each of the blades may also be changed as required.

In the present disclosure, each of the blades is set as long as the following conditions are satisfied: 1) each group of blades at least include one of a chamfer machining blade, a hole machining blade, an arc angle machining blade and a plane machining blade, so as to machine a chamfer, a round hole, an arc angle and a plane perpendicular to the axial line respectively when the combined tool for machining a rear steering knuckle center hole rotates around the axial line of the combined tool for machining a rear steering knuckle center hole; and 2) the projections of all the blades in the axial direction are continuous and cover the machining range of the rear steering knuckle center hole.

The tool body may be of an integral structure, which is machined by a rod, so that the rigidity and the stability of the tool are improved, and the requirement of the tool for rotation at a high revolution number is met.

To guarantee the hardness and strength requirements of a blade, a small-sized hard alloy steel blade is generally used. Since the blade is small in size, a cutting depth of the cutting parameters is small, and an impact load on the blade is low. Therefore, edge breakage and damage are not liable to occur during machining, and the life of the tool may be effectively prolonged. Even if the edge of a certain blade is broken, the tool still may be used. Of course, those of ordinary skilled in the art can understand that the blade also may be made of other materials with hardness and strength.

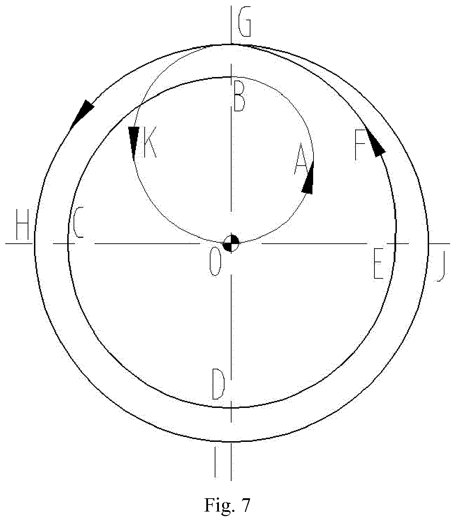

Fig. 7 is a tool path diagram of a combined tool for machining a rear steering knuckle center hole in a method for machining a rear steering knuckle center hole by using the combined tool for machining a rear steering knuckle center hole according to the first exemplary implementation of the present disclosure. The method for machining a rear steering knuckle center hole of a rear steering knuckle to be machined as shown in Figs. 8A to 8B by using the combined tool for machining a rear steering knuckle center hole is described below in combination with Fig. 7 and Figs. 8A to 8B.

A centring position in Fig. 7 is the point O, and a machining position is the point G. Any point on a connecting line between the centring position and the machining position is B. Any point on a machining path except for the point G is the point J. Any point on a connecting line between the point O and the point J is E. For the sake of illustration, each path is defined with reference to Fig. 7:
a first path: a semicircle which takes a connecting line between the point O and the point B as a diameter, is formed by connecting the point O to the point B and passes through the point A;
a second path: a 3/4 arc which takes the connecting line between the point O and the point B as a radius, is formed by connecting the point B to the point E and passes through the point C and the point D, and a smooth curve which is formed by connecting the point E to the point G and passes through the point F;
a third path: a circle which takes a connecting line between the point O and the point G as a radius, is started from the point G and passes through the point H and the point J; and
a fourth path: a semicircle which is formed by connecting the point G to the point O and passes through the point K.

The method for machining a rear steering knuckle center hole by using the combined tool for machining a rear steering knuckle center hole of the present disclosure includes that:
tool centring: the combined tool for machining a rear steering knuckle center hole is moved to a centring position such that an axial line of the combined tool for machining a rear steering knuckle center hole coincides with the point O in an axial direction, wherein the point O is located on an axial line of a rear steering knuckle center hole to be machined;
interpolation feeding: the combined tool for machining a rear steering knuckle center hole is anticlockwise moved along the first path;
interpolation machining: the combined tool for machining a rear steering knuckle center hole is anticlockwise moved along the second path and the third path, and then performs machining twice according to the second path and the third path; and
interpolation retraction: the combined tool for machining a rear steering knuckle center hole is anticlockwise moved along the fourth path to enable the combined tool for machining a rear steering knuckle center hole to return to the point O.

Here, the machining is completed.

The method for machining a rear steering knuckle center hole by using the combined tool for machining a rear steering knuckle center hole of the exemplary implementations of the present disclosure has the beneficial effects that:
1. the tool number is decreased from 6 to 1, so that the four-tool workpiece cutting time is saved;
2. the time spent by tool changing for 5 times and the idle stroke time are saved;
3. a machine tool magazine saves 5 tool positions; and
4. the working table does not need to be turned over or rotated in the process of machining the center hole, so as to guarantee the parts accuracy.

The above describes the implementations of the present disclosure in detail. However, the aspects of the present disclosure are not limited to the above implementations. Various modifications and replacements can be all applied to the above implementations without departing from the scope of the present disclosure.

## Claims

1. A combined tool for machining a rear steering knuckle center hole, comprising:
a tool body, the tool body comprising a shank, a tool bar and a steplike tool bit, wherein the steplike tool bit is provided with at least two tool teeth uniformly disposed in a circumferential direction; the at least two tool teeth extend along an axial direction of the combined tool for machining a rear steering knuckle center hole, and a chip breaker groove is concavely arranged between any two adjacent tool teeth; and
a blade assembly, the blade assembly comprising various blades, wherein the blade assembly comprises at least two groups of blades corresponding to the at least two tool teeth; each group of blades are mounted on a mounting plane of the circumferential side surface of the corresponding tool tooth along the axial direction; and projections of all the blades in the axial direction are continuous and cover a machining range of the rear steering knuckle center hole.

2. The combined tool for machining a rear steering knuckle center hole according to claim 1, wherein each group of blades at least comprise one of a chamfer machining blade, a hole machining blade, an arc angle machining blade and a plane machining blade, so as to machine a chamfer, a round hole, an arc angle and a plane perpendicular to the axial line respectively when the combined tool for machining a rear steering knuckle center hole rotates around an axial line of the combined tool for machining a rear steering knuckle center hole.

3. The combined tool for machining a rear steering knuckle center hole according to claim 2, wherein the steplike tool bit is provided with an even number of tool teeth; the two groups of blades mounted on the mounting planes of any two tool teeth that are symmetric in the radial direction are the same and are symmetric in the radial direction; and the two groups of blades mounted on the mounting planes of any two tool teeth that are asymmetric in the radial direction are different and are staggered in the axial direction.

4. The combined tool for machining a rear steering knuckle center hole according to claim 3, wherein the steplike tool bit is provided with four tool teeth, and the blade assembly comprises four groups of blades.

5. The combined tool for machining a rear steering knuckle center hole according to claim 4, wherein each group of blades comprise four blades; the four blades of the first group are a first blade, a second blade, a third blade and a fourth blade respectively; the four blades of the second group are a fifth blade, a sixth blade, a seventh blade and an eighth blade respectively; the four blades of the third group and the four blades of the first group are exactly the same and are symmetric in the radial direction; and the four blades of the fourth group and the four blades of the second group are exactly the same and are symmetric in the radial direction.

6. The combined tool for machining a rear steering knuckle center hole according to claim 5, wherein the steplike tool bit is divided into four sections according to the diameters, comprising, from the end far away from the shank, a first section, a second section, a third section and a fourth section respectively; the diameter of the fourth section is greater than that of the third section; the diameter of the third section is greater than that of the first section; and the diameter of the first section is greater than that of the second section.

7. The combined tool for machining a rear steering knuckle center hole according to claim 6, wherein the rear steering knuckle center hole corresponding to the third section to the first section of the steplike tool bit comprises a first hole, a second hole and a third hole in sequence; the diameter of the first hole is greater than that of the third hole, and the diameter of the third hole is greater than that of the second hole; a first plane is formed between the first hole and the second hole, and a second plane is formed between the second hole and the third hole; the first end part, adjacent to the first plane, of the first hole is provided with a first arc angle; the second end part, opposite to the first end part, of the first hole is provided with a first chamfer; a second chamfer is formed between the second plane and the second hole; and a second arc angle is formed between the second plane and the third hole;
the first blade is mounted at the third section of the steplike tool bit to machine the first hole;
the second blade is mounted at a joint of the second section and the third section of the steplike tool bit, stretches over the second section and the third section, and is used to machine the first hole, the first arc angle and the first plane;
the third blade is mounted at the second section of the steplike tool bit to machine the second hole and the second chamfer;
the fourth blade is mounted at the first section of the steplike tool bit to machine the third hole;
the fifth blade is mounted at a joint of the third section and the fourth section of the steplike tool bit, stretches over the third section and the fourth section, and is used to machine the first chamfer and the first hole;
the sixth blade is mounted at the third section of the steplike tool bit to machine the first hole;
the seventh blade is mounted at a joint of the second section and the third section of the steplike tool bit, stretches over the second section and the third section, and is used to machine the second hole; and
the eighth blade is mounted at the first section of the steplike tool bit to machine the second plane, the second arc angle and the third hole.

8. The combined tool for machining a rear steering knuckle center hole according to claim 3, wherein the steplike tool bit is provided with six tool teeth, and the blade assembly comprises six groups of blades.

9. The combined tool for machining a rear steering knuckle center hole according to claim 8, wherein each group of blades comprise four blades.

10. A method for machining a rear steering knuckle center hole by using the combined tool for machining a rear steering knuckle center hole according to any one of claims 1 to 9, comprising:
tool centring: moving the combined tool for machining a rear steering knuckle center hole to a centring position such that an axial line of the combined tool for machining a rear steering knuckle center hole coincides with an axial line of a rear steering knuckle center hole to be machined in an axial direction;
interpolation feeding: performing anticlockwise arc interpolation feeding on the combined tool for machining a rear steering knuckle center hole by 1/2 of a circumference by taking a circle center of the rear steering knuckle center hole as a start point;
interpolation machining: performing anticlockwise arc interpolation machining on the combined tool for machining a rear steering knuckle center hole by 3/4 of the circumference, then performing anticlockwise spiral interpolation machining towards the outer side by 1/4 of the circumference, and performing anticlockwise arc interpolation machining by a whole circle; and
interpolation retraction: performing anticlockwise arc interpolation retraction on the combined tool for machining a rear steering knuckle center hole to the start point.
